# EUROPEAN PATENT APPLICATION

(11) **EP 4 787 237 A1**
(43) Date of publication of application: **05.08.2026**
(21) Application number: 26153390.5
(22) Date of filing: 22.01.2026
(51) Int. Cl.: G06N 3/0464, G06N 3/084

(54) **METHOD AND APPARATUS WITH IMAGE PROCESSING**

(30) Priority: 04.02.2025 KR 20250014030
(71) Applicant: Samsung Electronics Co., Ltd, Suwon-si, Gyeonggi-do 16677 (KR)
(72) Inventor: KANG, Deokyoung, 16678 Suwon-si (KR); PARK, Seong-Jin, 16678 Suwon-si (KR); KWAK, Youngchul, 16678 Suwon-si (KR); RYOU, Serim, 16678 Suwon-si (KR); YANG, Jaewon, 16678 Suwon-si (KR); RHEE, Seon Min, 16678 Suwon-si (KR); JUNG, Chulho, 16678 Suwon-si (KR)
(74) Representative: Arnold & Siedsma

(57) **Abstract**

An image processing method and an apparatus are provided. The image processing method performed by a computing device including a processor and a memory includes configuring, by the processor, a convolutional layer or a transposed convolutional layer as a first convolutional layer; setting, by the processor, a filter; performing, by the processor, a convolutional operation or a transposed convolutional operation by applying the filter to weight of the first convolutional layer and generate a second convolutional layer; and performing, by the processor, a convolutional operation or a transposed convolutional operation by applying the second convolutional layer to an input tensor and outputting a result.

## Description

### BACKGROUND

### 1. Field

The present disclosure relates to a method and apparatus with image processing.

### 2. Description of Related Art

ResNet and U-Net, which are representative structures of convolutional neural networks (CNN) in deep learning, may include down-sampling and up-sampling operations during image processing. These operations are typically performed using strided convolutions and transposed convolution (also referred to as deconvolutions). Strided convolutions and transposed convolutions perform down-sampling and up-sampling by skipping over pixels at fixed intervals (e.g., every two or three pixels). However, these techniques can cause problems such as checkerboard artifact and image shift variance. Checkerboard artifact is a phenomenon in which a specific pattern appears repeatedly during the up-sampling process, causing an image to be distorted into an unbalanced shape. Image shift variance is a phenomenon in which small changes in the input image result in disproportionately large changes in the output, indicating a lack of robustness to input translation.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a processor-implemented method includes setting a convolutional layer or a transposed convolutional layer as a first convolutional layer; setting a filter; applying the filter to a weight of the first convolutional layer to perform a convolutional operation or a transposed convolutional operation and generate a second convolutional layer; and applying the second convolutional layer to an input tensor to perform a convolutional operation or a transposed convolutional operation and output a result.

In this way, the issue of reduced processing speed-arising from applying two consecutive convolutional operations to a high-resolution image, for example, or from combining a bilinear interpolation kernel with a convolutional operation-is addressed by integrating the two convolutional operations into a single operation. This approach maximizes computational efficiency and improves both training and inference speeds by approximately 15% or more, while maintaining the same output quality as conventional methods.

The outputting of the result may include applying a convolutional operation with a predetermined stride and padding to the input tensor using the weight of the second convolutional layer.

The first convolutional layer may include a layer configured to perform a convolutional operation with a kernel size of n x n (where n is a natural number), and the filter may include a layer configured to perform a convolutional operation with a kernel size of m x m (where m is a natural number).

The second convolutional layer may include a layer configured to perform a convolutional operation with a kernel size of (n + m - 1) x (n + m - 1).

The outputting of the result may include determining output padding based on a size of the filter; and applying a transposed convolutional operation with a predetermined stride and padding to the input tensor using the weight of the second convolutional layer.

The first convolutional layer may include a layer configured to perform a transposed convolutional operation with a kernel size of n x n (where n is a natural number), and the filter may include a layer configured to perform a transposed convolutional operation with a kernel size of m x m (where m is a natural number).

The second convolutional layer may include a layer configured to perform a transposed convolutional operation with a kernel size of (n + m - 1) x (n + m - 1).

The filter and the second convolutional layer may include one or more of a bilinear interpolation filter, a nearest-neighbor interpolation filter, and a Gaussian blur filter.

The method may further include performing normalization on the result using a normalization layer; and generating an output determined by applying an activation function to the normalized result.

The method may further include registering, by the processor, the filter as a buffer; and determining, by the processor, a loss from the generated output, and updating the weight by performing backward propagation on the activation function, the normalization layer, and the first convolutional layer and the second convolutional layer based on the loss.

In one general aspect, a processor-implemented method includes setting a convolutional layer or a transposed convolutional layer as a first convolutional layer; setting a filter; applying the filter to weight of the first convolutional layer to perform a convolutional operation or a transposed convolutional and generate a second convolutional layer; registering the filter as a buffer; and updating the weight by performing backward propagation on the first convolutional layer and the second convolutional layer.

The method may further include applying a convolutional operation with a predetermined stride and padding to an input tensor using the weight of the second convolutional layer.

The method may further include determining output padding based on a size of the filter; and applying a transposed convolutional operation with a predetermined stride and padding to the input tensor using the weight of the second convolutional layer.

The method may further include performing a convolutional operation or a transposed convolutional operation by applying the second convolutional layer to an input tensor; performing normalization through a normalization layer to generate a normalized result; and generating an output by applying an activation function to the normalized result.

The updating of the weight may include determining a loss by applying the second convolutional layer to the input tensor; and updating the weight by performing backward propagation on the activation function, the normalization layer, and the first convolutional layer and the second convolutional layer based on the loss.

In one general aspect, an apparatus includes one or more processors comprising processing circuitry; and memory comprising one or more storage media storing instructions that, when executed individually or collectively by the one or more processors, cause the apparatus to: configure a convolutional layer or a transposed convolutional layer as a first convolutional layer, set a filter, apply the filter to weight of the first convolutional layer to perform a convolutional operation or a transposed convolutional operation and generate a second convolutional layer, and apply the second convolutional layer to the input tensor to perform a convolutional operation or a transposed convolutional operation and output a result.

The execution of the instructions may cause the apparatus to further normalize the result through a normalization layer, and generate an output by applying an activation function to the normalized result.

The execution of the instructions may cause the one or more processors to further register the filter as a buffer, and determine a loss from the output, and update the weight by performing backward propagation on the activation function, the normalization layer, and the first convolutional layer and the second convolutional layer based on the loss.

Other features and aspects will be apparent from the following detailed description, the drawings, and the claims.

Additional features and aspect of processor-implemented method embodiments are defined by the following set of clauses:
1. A processor-implemented method comprising:
   setting a convolutional layer or a transposed convolutional layer as a first convolutional layer;
   setting a filter;
   applying the filter to weight of the first convolutional layer to perform a convolutional operation or a transposed convolutional and generate a second convolutional layer;
   registering the filter as a buffer; and
   updating the weight by performing backward propagation on the first convolutional layer and the second convolutional layer.
2. The method of clause 1, further comprising:
   applying a convolutional operation with a predetermined stride and padding to an input tensor using the weight of the second convolutional layer.
3. The method of clause 1, further comprising:
   determining output padding based on a size of the filter; and
   applying a transposed convolutional operation with a predetermined stride and padding to the input tensor using the weight of the second convolutional layer.
4. The method of clause 1, further comprising:
   performing a convolutional operation or a transposed convolutional operation by applying the second convolutional layer to an input tensor;
   performing normalization through a normalization layer to generate a normalized result; and
   generating an output by applying an activation function to the normalized result.
5. The method of clause 4, wherein
   the updating of the weight comprises:
   determining a loss by applying the second convolutional layer to the input tensor; and
   updating the weight by performing backward propagation on the activation function, the normalization layer, and the first convolutional layer and the second convolutional layer based on the loss.

### BRIEF DESCRIPTION OF THE DRAWINGS

FIG. 1 illustrates an image processing apparatus according to one or more embodiments.
FIGS. 2 through 5 illustrate implementation examples of an image processing apparatus according to one or more embodiments.
FIGS. 6 through 9 illustrate additional implementation examples of an image processing apparatus according to one or more embodiments.
FIG. 10 illustrates an image processing method according to one or more embodiments.
FIG. 11 illustrates another image processing method according to one or more embodiments.
FIG. 12 illustrates a computing device according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As nonlimiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

The artificial intelligence models (AI models) described herein are machine learning models that learn at least one task and can be implemented as a computer program (executable instructions or executable code) executed by one or more processors. The task learned by the AI model may involve solving a problem through machine learning or a work to be performed through machine learning. AI models may be implemented as computer programs that run on computing devices, downloaded over a network, or sold in a product form. Alternatively, the AI model(s) may be connected to various devices through a network. Also, the AI model(s) may be interoperable with various devices through a network.

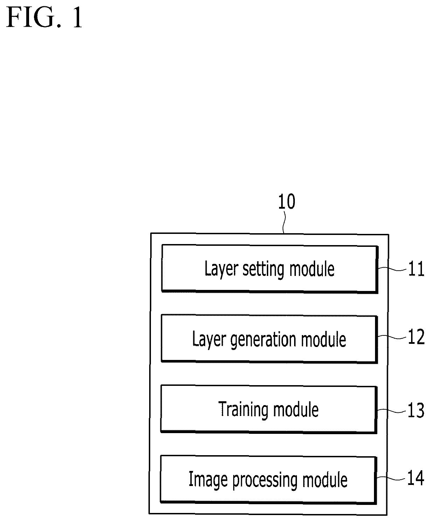

FIG. 1 is a diagram illustrating an image processing apparatus according to one or more embodiments.

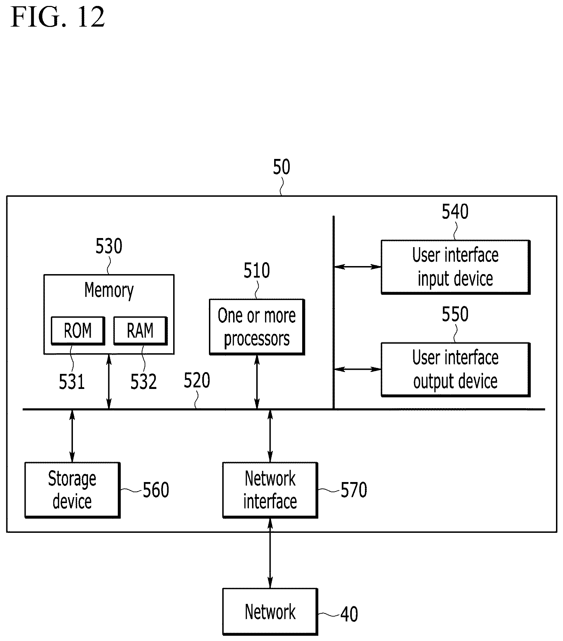

Referring to FIG. 1, an image processing apparatus 10 may execute program codes or instructions loaded into one or more memory devices via one or more processors. For example, the image processing apparatus 10 may be implemented using a computing device 50, such as the device described below with reference to FIG. 12. In this case, the one or more processors may correspond to a processor 510 of the computing device 50, and the one or more memory devices may correspond to a memory 530 of the computing device 50. Program code or instructions may be executed by the one or more processors to perform image processing. In this specification, the term "module" is used to logically divide and describe functions performed by the program code or instructions.

The image processing apparatus 10 may include a layer setting module 11, a layer generation module 12, a training module 13, and an image processing module 14.

The layer setting module 11 may configure a convolutional layer (Conv) or a transposed convolutional layer (Deconv) as a first convolutional layer.

The convolutional layer may perform a convolutional operation using a predetermined kernel size and stride. The layer setting module 11 may configure the convolutional layer as the first convolutional layer when performing down-sampling on an image. In some embodiments, the first convolutional layer may include a layer that performs a convolutional operation with a kernel size of n x n (where n is a natural number) and a stride of any natural number greater than or equal to 1. For example, the first convolutional layer may include a layer that performs a convolutional operation with a kernel size of 3 x 3 and a stride of 1, where the kernel moves one unit/space at a time to perform a convolution operation on an input image or tensor.

The transposed convolutional layer may perform a transposed convolutional operation using a predetermined kernel size and stride. The layer setting module 11 may configure the transposed convolutional layer as the first convolutional layer when performing up-sampling on an image. In some embodiments, the first convolutional layer may include a layer that performs a transposed convolutional operation with a kernel size of n x n and a stride of any natural greater than or equal to 1. For example, the first convolutional layer may include a layer that performs a transposed convolutional operation with a kernel size of 3 x 3 and a stride of 1, where the kernel moves one unit/space at a time to perform the transposed convolutional operation on the input image or tensor.

The layer setting module 11 may also configure a filter. The filter may be a layer applied to the input tensor with a predetermined kernel size and stride to extract or transform features. In some embodiments, when performing down-sampling, the filter may be implemented as a convolution layer that performs a convolutional operation with a kernel size of m x m (where m is a natural number) and a stride of any natural number greater than or equal to 2. For example, the filter may be implemented as a layer that performs a convolutional operation with a 4 x 4 kernel and a stride of 2. Conversely, when performing up-sampling, the filter may be implemented as a layer that performs a transposed convolutional operation with a kernel size of m x m and a stride of any natural number greater than or equal to 2, such as a transposed convolutional operation with a 4 x 4 kernel and a stride of 2.

The layer generation module 12 may apply the filter to the weight of the first convolutional layer to perform a convolutional operation or a transposed convolutional operation and generate a second convolutional layer.

The second convolutional layer may perform a convolutional operation or a transposed convolutional operation with a predetermined kernel size and stride. In some embodiments, when performing down-sampling, the second convolutional layer may include a layer that performs a convolutional operation with a kernel size of (n + m - 1) x (n + m - 1) and a stride of any natural number greater than or equal to 2. For example, the second convolutional layer may perform a convolutional operation with a kernel size of 6 x 6 and a stride of 2. For example, the layer generation module 12 may perform a convolutional operation by applying a filter implemented as a layer performing a convolutional operation with a kernel size of 4 x 4 and a stride of 2 to the weight of a layer performing a convolutional operation with a kernel size of 3 x 3 and a stride of 1, producing the second convolutional layer with the combined characteristics (e.g., a kernel size of 6 x 6 and a stride of 2).

On the other hand, when performing up-sampling, the second convolutional layer may include a layer that performs a transposed convolutional operation with a kernel size of (n + m - 1) x (n + m - 1) and a stride of at least 2. For example, the second convolutional layer may perform a transposed convolutional operation with a kernel size of 6 x 6 and a stride of 2. For example, the layer generation module 12 may perform a transposed convolutional operation by applying a filter implemented as a layer performing a transposed convolutional operation with a kernel size of 4 x 4 and a stride of 2 to the weight of a layer performing a transposed convolutional operation with a kernel size of 3 x 3 and a stride of 1, thereby generating the second transposed convolution layer with the combined characteristics (e.g., a kernel size of 6 x 6 and a stride of 2).

In some embodiments, the filter and the second convolutional layer may include a bilinear interpolation filter, a nearest-neighbor interpolation filter, and/or a Gaussian blur filter. The bilinear interpolation filter may enable smoother image enlargement and transformation by generating a new value through weighted averaging of neighboring pixel values. The nearest-neighbor interpolation filter may be computationally efficient and simply assign the nearest pixel value to determine a new pixel value. The Gaussian blur filter may operate by removing noise and smoothing an image by applying a weighted average based on a Gaussian distribution. However, the scope of the present disclosure is not limited to the types of filters listed herein, and the filter and the second convolutional layer may include any type of low-pass filter not listed herein.

The image processing module 14 may apply the second convolutional layer generated by the layer generation module 12 to the input tensor to perform a convolutional operation and output the result.

Specifically, when performing down-sampling, the image processing module 14 may apply a convolutional operation with a predetermined stride and padding to the input tensor using the weight of the second convolutional layer generated by the layer generation module 12. When performing up-sampling, the image processing module 14 may determine output padding based on the filter size and apply a transposed convolutional operation with a predetermined stride and padding to the input tensor using the weight of the second convolutional layer generated by the layer generation module 12, and apply the output padding to a transposed convolution operation result to output the result (e.g. to output an output image).

In some embodiments, the image processing module 14 may apply the second convolutional layer to the input tensor to perform normalization on the result of the convolutional operation through a normalization layer. The image processing module 14 may perform normalization by determining the average and variance on a mini-batch basis for each channel of the output tensor in response to the convolutional operation-for example, according to batch normalization (BN)-and the normalization method may be implemented in a method other than BN.

In some embodiments, the image processing module 14 may generate an output by applying an activation function to the normalized result. The image processing module 14 may generate an output with added non-linearity by applying, for example, a rectified linear unit (ReLU) as an activation function, and a function other than a ReLU may also be used as the activation function.

The training module 13 may train the first and second convolutional layers provided by the layer setting module 11 and the layer generation module 12, and train the normalization layer and the activation function structure. Specifically, during training, a forward propagation may be performed, where the input tensor passes through the sequence of layers (e.g., layers of convolutional operation, normalization, and activation function) to generate an output. Next, a backward propagation may be performed by determining the output-that is, the difference between the predicted value and the correct value-through a loss function, and determining the gradient by differentiating the error, which is based on the loss value, with respect to the weight of each layer. The weight may be updated using the determined gradient.

In some embodiments, the image processing apparatus 10 may register the filter as a buffer. By registering the filter as a buffer, the weight may remain affixed during the training process. In other words, the filter is not treated as a learnable parameter, and is excluded from the gradient determination and is updated during the backward propagation.

According to one or more embodiments, the operational delay associated with processing high-resolution images may be solved by combining the convolutional layer and the filter into a single operation, rather than applying them separately. By embedding the filter's effect into the convolutional operation itself, the overall computational load and memory access frequency can be reduced, thereby minimizing bottlenecks and enabling faster, more efficient processing of high-resolution images.

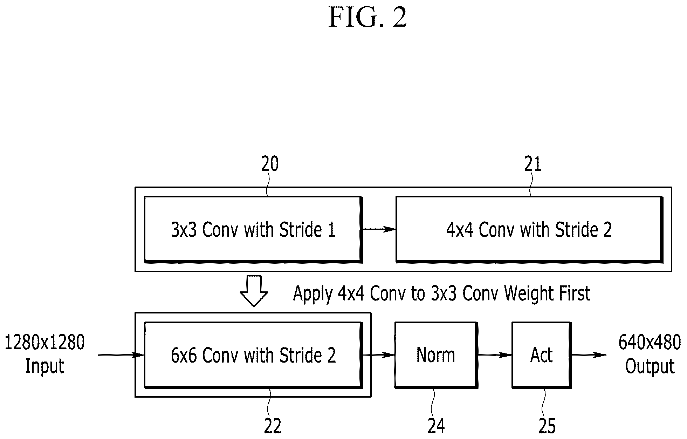

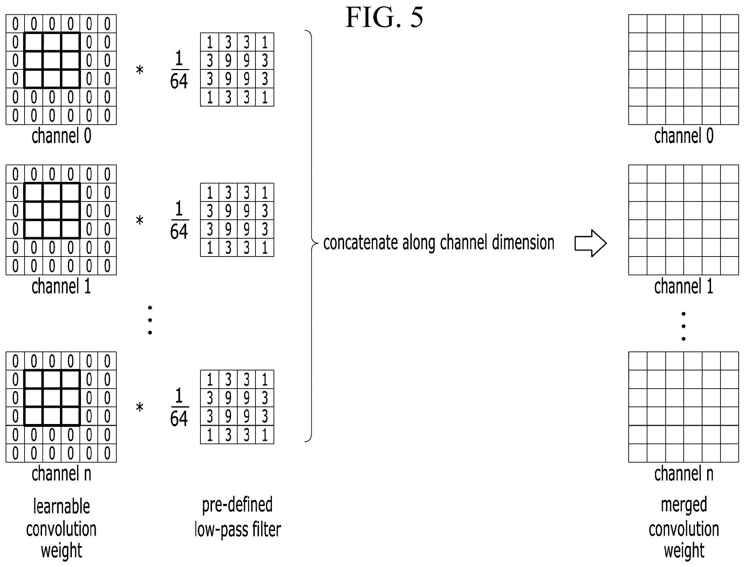

FIGS. 2 through 5 illustrate implementation examples of an image processing apparatus according to one or more embodiments. It should be noted that the specific values shown in FIGS. 2 through 5 are provided solely for illustrative purposes. That is, values such as the resolution of the input and output images, the kernel size and stride value of a first convolutional layer 20, a filter 21, and a second convolutional layer 22, as well as the values depicted in FIG. 5, are merely examples. The scope of the present disclosure is not limited to these exemplary values.

Referring to FIG. 2, the image processing apparatus may receive an input image with a resolution of, for example, 1280 x 1280, perform image processing, and generate an output image with a resolution of, for example, 640 x 480. Here, the input image may be implemented as an input tensor. During image processing, down-sampling may be performed. For example, when the second convolutional layer 22 is applied to the input tensor to perform the convolutional operation, a resolution of the input image is greater than a resolution of the output image.

The layer setting module of the image processing apparatus may configure the first convolutional layer 20. The first convolutional layer 20 may include, for example, a layer that performs a convolutional operation with a kernel size of 3 x 3 and a stride of 1. The layer setting module may also configure the filter 21. The filter 21 may include, for example, a layer that performs a convolutional operation with a kernel size of 4 x 4 and a stride of 2.

The layer generation module of the image processing apparatus may generate the second convolutional layer 22 by applying the filter 21 to the weight of the first convolutional layer 20 and performing a convolutional operation. The second convolutional layer 22 may include, for example, a layer that performs a convolutional operation with a kernel size of 6 x 6 and a stride of 2.

The image processing apparatus may perform a convolutional operation by applying the generated second convolutional layer 22 to an input tensor corresponding to an input image, and perform normalization by transferring the result to a normalization layer (Norm) 24. Subsequently, the image processing apparatus may apply an activation function (Act) 25 to the result of normalization and output the result as an output image.

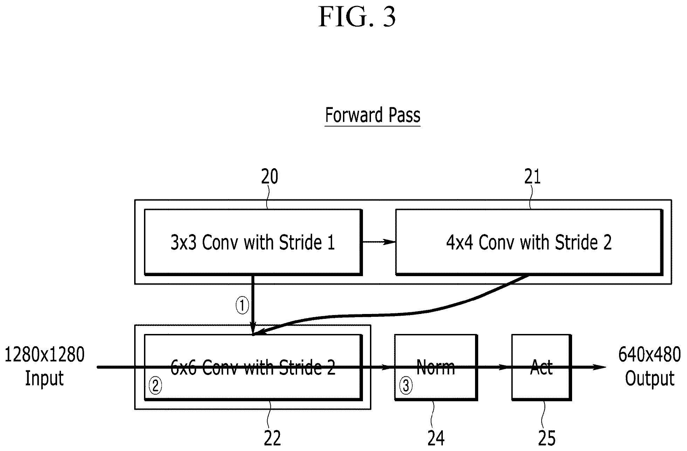

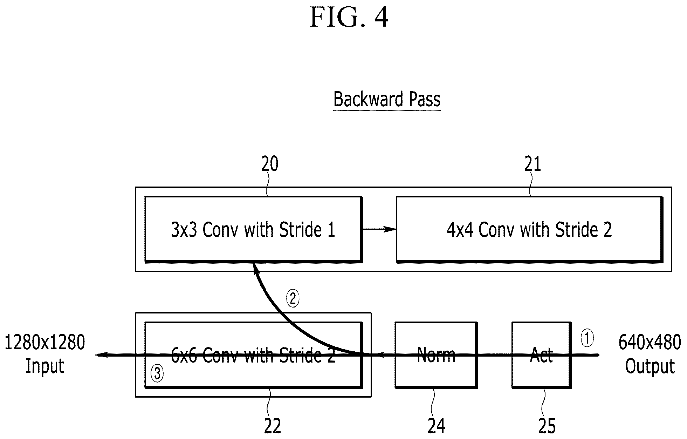

The training module of the image processing apparatus may perform training on the first convolutional layer 20 and the second convolutional layer 22, as shown in FIGS. 3 and 4.

Referring to FIG. 3, the layer generation module may apply the filter 21 to the weight of the first convolutional layer 20 to perform a convolutional operation and generate the second convolutional layer 22 (see "①"). Then, the training module may pass the input tensor to the second convolutional layer 22 to obtain an intermediate result (see "②"). The training module may obtain a prediction result by passing the obtained intermediate result to the normalization layer 24 and the activation function 25 (see "③"). From the prediction result obtained in this way, a loss value may be determined using a loss function.

Next, the training module may update the weight by performing backward propagation on the activation function 25, the normalization layer 24, and the first convolutional layer 20 and the second convolutional layer 22 based on the loss value. For example, referring to FIG. 4, the training module determine an error based on the loss value, and backward-propagates the error backward-propagation through the activation function 25 and the normalization layer 24 to obtain a gradient (e.g., a gradient for the activation function 25 and the normalization layer 24) (see "①"), and then differentiates the error with respect to the first convolutional layer 20 and the second convolutional layer 22 (e.g., with respect to the weight of the first convolutional layer 20 and the second convolutional layer 22) to determine a gradient for the weight (e.g., a gradient for the weight of the first convolutional layer 20 and the second convolutional layer 22) (see "②" and "③"). The training module may use the determined gradient (e.g., the gradient for the weight of the first convolutional layer 20 and the second convolutional layer 22) to update the weight using an optimization algorithm. As the weight is iteratively updated, the loss value gradually decreases, enabling the system to learn the optimal weight. Notably, during the backward propagation, the weight of the filter 21 remains affixed. That is, the filter 21 (e.g., the weight of the filter 21) is not treated as a learnable parameter, and the gradient (e.g., the gradient for the weight of the filter 21) may remain undetermined and unupdated during the backward propagation.

FIG. 5 conceptually illustrates the process by which the layer generation module of the image processing apparatus applies the filter 21 to the weight of the first convolutional layer 20 to perform a convolutional operation and generate the second convolutional layer 22. The layers shown for each of the n+1 channels of the learnable convolution weight in FIG. 5 may correspond to the first convolutional layer 20. Similarly, the layers shown for each of the n+1 channels of the pre-defined low-pass filters in FIG. 5 may correspond to the filter 21. These layers may be concatenated along the channel dimension to generate the second convolutional layer 22, which is shown in FIG. 5 as the merged convolution weight for each of the n+1 channels.

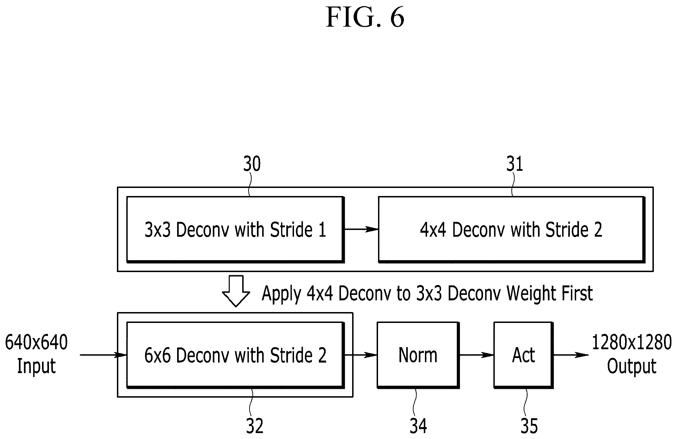

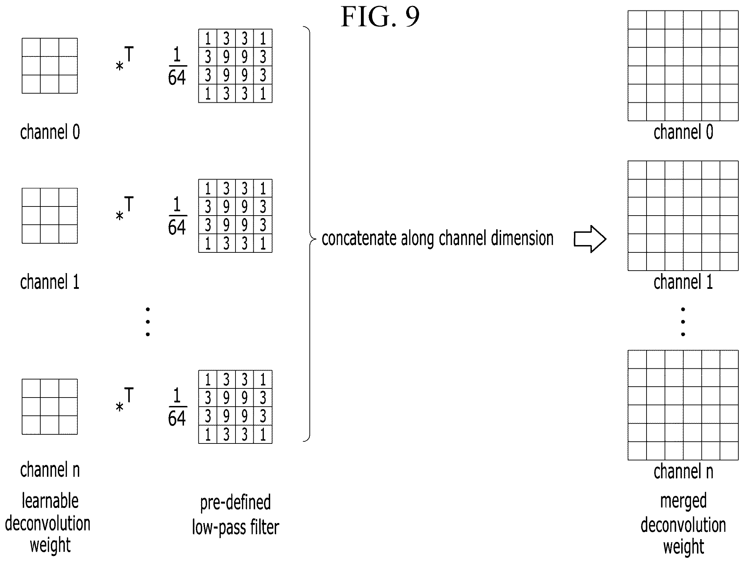

FIGS. 6 through 9 illustrate implementation examples of an image processing apparatus according to one or more embodiments. It should be noted that the specific values shown in FIGS. 6 through 9 are provided solely for illustrative purposes. For example, the resolution of the input and output images, the kernel size and stride value of a first convolutional layer 30, a filter 31, and a second convolutional layer 32, as well as the specific values described in FIG. 9 are merely examples. The scope of the present disclosure is not limited to these exemplary values.

Referring to FIG. 6, the image processing apparatus may receive an input image with a resolution of, for example, 640 x 480, perform image processing, and generate an output image with a resolution of, for example, 1280 x 1280. Here, the input image may be implemented as an input tensor. During the image processing, up-sampling may be performed. For example, when the second convolutional layer 22 is applied to the input tensor to perform the transposed convolutional operation, the resolution of the input image is smaller than the resolution of the output image.

The layer setting module of the image processing apparatus may configure the first convolutional layer 30. The first convolutional layer 30 may include, for example, a layer that performs a transposed convolutional operation with a kernel size of 3 x 3 and a stride of 1. The layer setting module may also configure the filter 31. The filter 31 may include, for example, a layer that performs a transposed convolutional operation with a kernel size of 4 x 4 and a stride of 2.

The layer generation module of the image processing apparatus may apply the filter 31 to the weight of the first convolutional layer 30 to perform a transposed convolutional operation and generate the second convolutional layer 32. The second convolutional layer 32 may include, for example, a layer that performs a transposed convolutional operation with a kernel size of 6 x 6 and a stride of 2.

The image processing apparatus may apply the generated second convolutional layer 32 to an input tensor corresponding to an input image to perform a transposed convolutional operation, and perform normalization by transferring the result to a normalization layer 34. Thereafter, the image processing apparatus may apply an activation function 35 to the result of normalization and output the result as an output image.

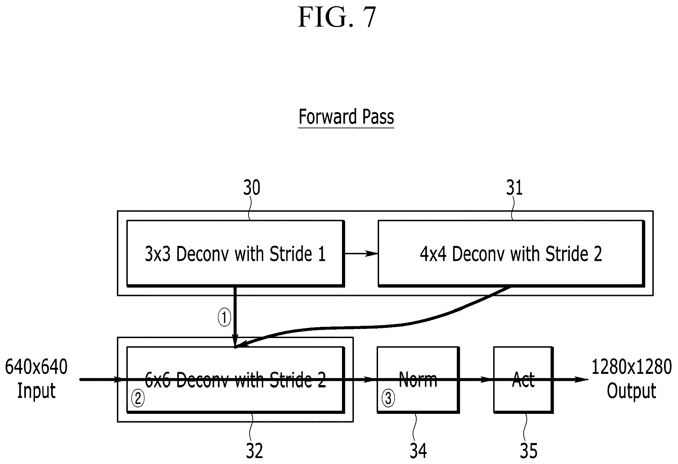

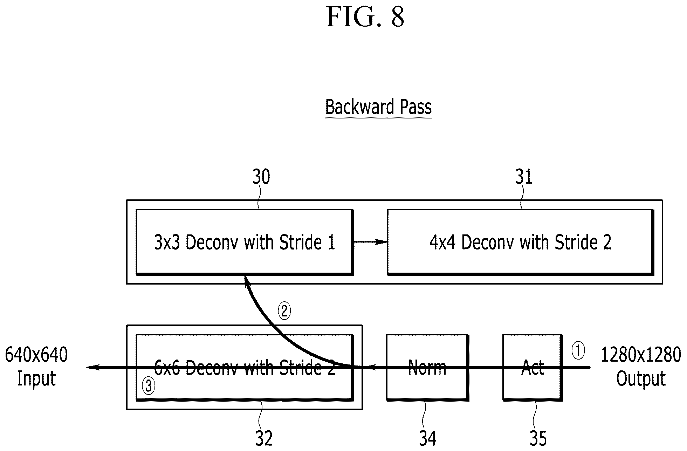

The training module of the image processing apparatus may perform training on the first convolutional layer 30 and the second convolutional layer 32, as shown in FIGS. 7 and 8.

Referring to FIG. 7, the layer generation module may apply the filter 31 to the weight of the first convolutional layer 30 to perform a transposed convolutional operation and generate the second convolutional layer 32 (see "①"). The training module may then pass the input tensor through the second convolutional layer 32 to obtain an intermediate result (see "②"). Next, the training module may generate a prediction result by passing the obtained intermediate result through the normalization layer 34 and the activation function 35 (see "③"). From the prediction result obtained in this way, a loss value may be determined using a loss function.

The training module may update the weight by performing backward propagation on the activation function 35, normalization layer 34, and the first convolutional layer 30 and the second convolutional layer 32 based on the loss value. For example, referring to FIG. 8, the training module may determine an error based on the determined loss value, and backward-propagates the error through the activation function 35 and the normalization layer 34 to obtain a gradient (e.g., a gradient for the activation function 35 and the normalization layer 34) (see "①"), and then differentiated differentiates the error with respect to the first convolutional layer 30 and the second convolutional layer 32 (e.g., with respect to the weight of the first convolutional layer 30 and the second convolutional layer 32) to determine a gradient for the weight (e.g., a gradient for the weight of the first convolutional layer 30 and the second convolutional layer 32) (see "②" and "③"). Afterwards, the training module may use the determined gradient (e.g., the gradient for the weight of the first convolutional layer 30 and the second convolutional layer 32) to update the weight using an optimization algorithm. As the weight is iteratively updated, the loss value gradually decreases, allowing the apparatus to learn optimal weight. Importantly, during backward propagation, the weight of the filter 31 remains fixed. In other words, the filter 31 (e.g., the weight of the filter 31) is not treated as a learnable parameter, and the gradient (e.g., the gradient for the weight of the filter 31) may be neither determined nor updated during the backward propagation.

FIG. 9 conceptually illustrates the process by which the layer generation module of the image processing apparatus applies the filter 31 to the weight of the first convolutional layer 30 to perform a convolutional operation and generate the second convolutional layer 32. The layers illustrated for each of the n+1 channels corresponding to the learnable deconvolution weight in FIG. 9 may represent the first convolutional layer 30. The layers illustrated for each of the n+1 channels, corresponding to the pre-defined low-pass filters in FIG. 9, may represent the filter 31. These layers may be concatenated along the channel dimension to generate the second convolutional layer 32, shown in FIG. 9 as the merged deconvolutional weight for each of the n+1 channels.

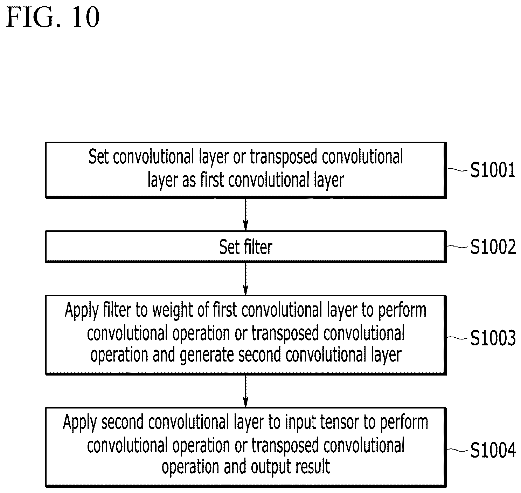

FIG. 10 is a diagram illustrating an image processing method according to one or more embodiments.

Referring to FIG. 10, the image processing method may include setting a convolutional layer or a transposed convolutional layer as the first convolutional layer (S1001), setting the filter (S1002), applying the filter to the weight of the first convolutional layer to perform a convolutional operation or a transposed convolutional operation and generate the second convolutional layer (S1003), and applying the second convolutional layer to the input tensor to perform a convolutional operation or a transposed convolutional operation and output a result (S1004).

For a more detailed explanation of the above image processing method, reference may be made to the one or more embodiments described in this disclosure, and repetitive description is omitted here for brevity.

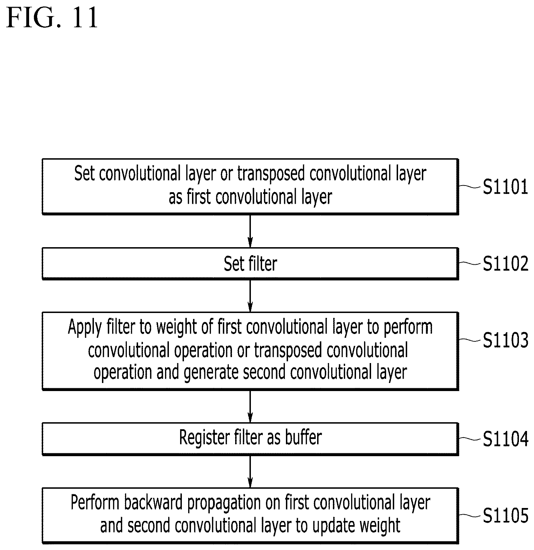

FIG. 11 is a diagram illustrating another image processing method according to one or more embodiments.

Referring to FIG. 11, the image processing method may include setting a convolutional layer or a transposed convolutional layer as the first convolutional layer (S1101), setting the filter (S1102), applying the filter to the weight of the first convolutional layer to perform a convolutional operation or a transposed convolutional operation and generate the second convolutional layer (S1103), registering the filter as a buffer (S1104), and updating the weight by performing backward propagation on the first and second convolutional layers based on the output tensor (S1105).

For a more detailed explanation of the above image processing method, reference may be made to the embodiments described elsewhere in this specification, and repetitive description is omitted here for clarity.

FIG. 12 illustrates a computing device according to one or more embodiments.

Referring to FIG. 12, the image processing method and the apparatus described in the above embodiments may be implemented using the computing device 50. The computing device 50 may be implemented as various types of electronic devices, servers or similar systems, and its function may be realized through a combination of software and hardware.

The computing device 50 may include one or more processors 510, a memory 530, a user interface input device 540, a user interface output device 550, and a storage device 560, all of which may communicate via a bus 520. The computing device 50 may also include a network interface 570 electrically connected to a network 40. The network interface 570 may transmit or receive signals to and from other entities via the network 40.

The one or more processors 510 may be implemented as various types of calculation devices, such as a microcontroller unit (MCU), an application processor (AP), a central processing unit (CPU), a graphic processing unit (GPU), a neural processing unit (NPU), a quantum processing unit (QPU), etc. As a semiconductor device, the one or more processors 510 may execute instructions stored in the memory 530 or the storage device 560 and play a central role in system operation. Program codes and data stored in the memory 530 or the storage device 560 instruct the one or more processors 510 to perform specific tasks, thereby enabling the overall operation of the system. The one or more processors 510 may be configured to implement various functions and methods described with respect to FIGS. 1 through 11.

The memory 530 and storage device 560 may include various types of volatile or non-volatile storage medium for storing and accessing data of the system. For example, the memory 530 may include a read-only memory (ROM) 531 and a random access memory (RAM) 532. In some embodiments, the memory 530 may be embedded in the one or more processors 510, allowing high-speed data transmission between the memory 530 and the one or more processors 510. In other embodiments, the memory 530 may be external to the one or more processors 510 and connected via various data buses or interfaces, such as a memory controller or a high-speed peripheral component interconnect express (PCIe) interface.

In some embodiments, at least some components or functions of the method and device, such as those used for image processing, may be implemented as a program or software executed by the computing device 50. The program or software may be stored on a computer-readable recording medium or storage medium. Specifically, a computer-readable recording medium or storage medium may store a program that, when executed by the one or more processors using the memory 530 or the storage device 560, performs steps of the image processing method according to one or more embodiments.

In some embodiments, at least some components or functions of the method and device for image processing may be implemented using hardware or circuitry of the computing device 50. Such components or functions may also be implemented using separate hardware or circuitry that may be electrically connected to the computing device 50.

According to the one or more embodiments, the issue of reduced processing speed-arising from applying two consecutive convolutional operations to a high-resolution image, or from combining a bilinear interpolation kernel with a convolutional operation-is addressed by integrating the two convolutional operations into a single operation. This approach maximizes computational efficiency and improves both training and inference speeds by approximately 15% or more, while maintaining the same output quality as conventional methods.

The apparatuses, modules, networks, processors, memory, storage devices, apparatus 10, module 11/12/13/14, network 40, computing device 50, processor 510, bus 520, memory 530, input device 540, output device 550, storage device 560, network interface 570, and other apparatuses described herein with respect to FIGS. 1-12 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-11 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software include higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), a card type memory such as multimedia card or micro card (for example, secure digital (SD) or extreme digital (XD)), magnetic tapes, floppy disks, magnetooptical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

The examples described herein are to be considered in a descriptive sense only, and not for purposes of limitation. Descriptions of features or aspects in each example are to be considered as being applicable to similar features or aspects in other examples.

Therefore, in addition to the above disclosure, the scope of the disclosure may also be defined by the claims and their equivalents, and all variations within the scope of the claims and their equivalents are to be construed as being included in the disclosure.

## Claims

1. A processor-implemented method comprising:
setting a convolutional layer or a transposed convolutional layer as a first convolutional layer;
setting a filter;
applying the filter to a weight of the first convolutional layer to perform a convolutional operation or a transposed convolutional operation and generate a second convolutional layer; and
applying the second convolutional layer to an input tensor to perform a convolutional operation or a transposed convolutional operation and output a result.

2. The method of claim 1, wherein
the outputting of the result comprises:
applying a convolutional operation with a predetermined stride and padding to the input tensor using the weight of the second convolutional layer.

3. The method of claim 2, wherein
the first convolutional layer comprises a layer configured to perform a convolutional operation with a kernel size of n x n (where n is a natural number), and
the filter comprises a layer configured to perform a convolutional operation with a kernel size of m x m (where m is a natural number).

4. The method of claim 3, wherein
the second convolutional layer comprises a layer configured to perform a convolutional operation with a kernel size of (n + m - 1) x (n + m - 1).

5. The method of any one of the previous claims, wherein
the outputting of the result comprises:
determining output padding based on a size of the filter; and
applying a transposed convolutional operation with a predetermined stride and padding to the input tensor using the weight of the second convolutional layer.

6. The method of claim 5, wherein
the first convolutional layer comprises a layer configured to perform a transposed convolutional operation with a kernel size of n x n (where n is a natural number), and
the filter comprises a layer configured to perform a transposed convolutional operation with a kernel size of m x m (where m is a natural number).

7. The method of claim 6, wherein
the second convolutional layer comprises a layer configured to perform a transposed convolutional operation with a kernel size of (n + m - 1) x (n + m - 1).

8. The method of any one of the previous claims, wherein
the filter and the second convolutional layer comprise one or more of a bilinear interpolation filter, a nearest-neighbor interpolation filter, and a Gaussian blur filter.

9. The method of any one of the previous claims, further comprising:
performing normalization on the result using a normalization layer; and
generating an output determined by applying an activation function to the normalized result.

10. The method of claim 9, further comprising:
registering, by the processor, the filter as a buffer; and
determining, by the processor, a loss from the generated output, and updating the weight by performing backward propagation on the activation function, the normalization layer, and the first convolutional layer and the second convolutional layer based on the loss.

11. An apparatus, comprising:
one or more processors comprising processing circuitry; and
memory comprising one or more storage media storing instructions that, when executed individually or collectively by the one or more processors, cause the apparatus to:
configure a convolutional layer or a transposed convolutional layer as a first convolutional layer,
set a filter,
apply the filter to weight of the first convolutional layer to perform a convolutional operation or a transposed convolutional operation and generate a second convolutional layer, and
apply the second convolutional layer to the input tensor to perform a convolutional operation or a transposed convolutional operation and output a result.

12. The apparatus of claim 11, wherein
the first convolutional layer comprises a layer configured to perform a convolutional operation with a kernel size of n x n (where n is a natural number),
the filter comprises a layer configured to perform a convolutional operation with a kernel size of m x m (where m is a natural number), and
the second convolutional layer comprises a layer configured to perform a convolutional operation with a kernel size of (n + m - 1) x (n + m - 1).

13. The apparatus of claim 11, wherein
the first convolutional layer comprises a layer configured to perform a transposed convolutional operation with a kernel size of n x n (where n is a natural number),
the filter comprises a layer configured to perform a transposed convolutional operation with a kernel size of m x m (where m is a natural number), and
the second convolutional layer comprises a layer configured to perform a transposed convolutional operation with a kernel size of (n + m - 1) x (n + m - 1).

14. The apparatus of any one of claims 11-13, wherein the execution of the instructions causes the apparatus to further:
normalize the result through a normalization layer,
and generate an output by applying an activation function to the normalized result.

15. The apparatus of claim 14, wherein the execution of the instructions causes the one or more processors to further:
register the filter as a buffer, and
determine a loss from the output, and update the weight by performing backward propagation on the activation function, the normalization layer, and the first convolutional layer and the second convolutional layer based on the loss.
